# EUROPEAN PATENT APPLICATION

(11) **EP 4 234 179 A1**
(43) Date of publication of application: **30.08.2023**
(21) Application number: 22159281.9
(22) Date of filing: 28.02.2022
(51) Int. Cl.: B25J 9/08, B25J 9/00

(54) **A SYSTEM OF MODULAR ROBOTIC ARMS WITH ROBOTICALLY RECONFIGURABLE MODULES**

(71) Applicant: Airbus Defence and Space Limited, Stevenage Hertfordshire SG1 2AS (GB)
(72) Inventor: Allouis, Elie, Stevenage (GB); Hall, Alexander, Stevenage (GB); Shilton, Mark, Stevenage (GB); Garland, Martin, Stevenage (GB)
(74) Representative: Rogan, Jack William

(57) **Abstract**

The present invention relates to a system of a plurality of robotic arms. Each robotic arm is of the modular type and for use in a space environment. Each robotic arm is associated with at least one base fixing linked to a space platform and has at least one operational configuration. Each robotic arm comprises, in each operational configuration: a plurality of structural modules, one of the plurality of structural modules being connected to the base fixing, and at least one end effector configured to perform at least one operation and connected to one of said plurality of structural modules. Each of the plurality of structural modules comprises at least two interfaces such that a first interface is configured to connect each of the plurality of structural modules to one adjacent structural module or to the base fixing, and a second interface is configured to connect each of the plurality of structural modules to another adjacent structural module or to said end effector. In each configuration, the plurality of structural modules of each robotic arm is reconfigurable by another of the robotic arms in the space environment. Each of the plurality of structural modules comprising at least one external compatible attachment area compatible with said end effector. The present invention also relates to a method of assembling a robotic arm in a hazardous environment and reconfiguring a robotic arm in a hazardous environment.

## Description

### Technical Field

The technical field of the present invention is a system of robotic arms. More specifically, the technical field of the present invention is a reconfigurable modular robotic arm for use in hazardous environments. The present invention also relates to a method of assembling a reconfigurable modular robotic arm in a hazardous environment, reconfiguring the modular robotic arm, and a system for performing the methods

### Background

Robotic arms are known in the manufacturing industry to assist in the manufacture of various types of products. The patent FR2632561 teaches a robotic arms able joined together in order to be able to "walk". However such an independent robot would require a very complex control system. Actually in space all instruments need to have a high robustness and need to comprise redundant system.

### Summary

It is an object of the present invention to provide an advantageous modular robotic arm for use in space environments.

In accordance with embodiments of the invention described herein, there is provided a modular robotic arm for use in a hazardous environment. The robotic arm comprises a plurality of structural modules, and at least one end effector configured to perform an operation, each of the plurality of structural modules comprising at least one interface configured to connect each of the plurality of structural modules to at least one adjacent structural module, and each of the plurality of structural modules comprising at least one external attachment area compatible with an end effector of a further robotic arm, wherein the modular robotic arm has a first configuration of the plurality of structural modules and is robotically reconfigurable to change the robotic arm from its first configuration to a second configuration of the plurality of structural modules in a hazardous environment.

In accordance with one aspect of the present invention, there is provided a system of a plurality of robotic arms, wherein each robotic arm is of the modular type and for use in a space environment, each robotic arm having at least one operational configuration and comprising, in each operational configuration: a base fixing fixable to a space platform, a plurality of structural modules, one of the plurality of structural modules being connected to the base fixing, and at least one end effector configured to perform at least one operation and connected to one of the plurality of structural modules, each of the plurality of structural modules comprising at least two interfaces such that a first interface is configured to connect each of the plurality of structural modules to one adjacent structural module or to the base fixing, and a second interface is configured to connect each of the plurality of structural modules to another adjacent structural module or to said end effector, wherein each robotic arm, in each configuration is reconfigurable by another of the robotic arms to change at least one structural module in a space environment, each of the plurality of structural modules comprising at least one external compatible attachment area compatible with said end effector.

In some embodiments, the end effector may comprise a locking and unlocking module for at least engaging or disengaging the interface of each structural module, arranged toward the base of the arm being reconfigured, while this structural module being maintained by the end effector of the operating arm.

In some embodiments, the base fixings may be placed at distances from each other such that each base fixing can be reached by at least one of the robotic arms.

In some embodiments, each robotic arm in each configurations may be robotically reconfigurable by another robotic arm to change said end effector. Each end effector may comprises at least one external compatible attachment area.

In some embodiments, at least one, or each, robotic arm may be reconfigurable by replacing at least one of the plurality of structural modules with an identical structural module. In some embodiments, at least one robotic arm may be reconfigurable by replacing at least one of the plurality of structural modules with at least one different structural module.

In some embodiments, at least one, or each, robotic arm may be reconfigurable by repositioning at least two of the plurality of structural modules relative to each other. In some embodiments, at least one, or each, robotic arm may be reconfigurable by adding at least one further module to the plurality of structural modules. In some embodiments, at least one, or each, robotic arm may be reconfigurable by removing at least one of the plurality of structural modules from the modular robotic arm.

In some embodiments, said external compatible attachment area may comprise a grapple fixture configured such that said end effector of one of the robotic arms is able to hold each structural module of another of the robotic arms.

In some embodiments, at least some of the structural modules of each robotic arm comprise active structural modules, each comprising at least one actuator configured to cause relative motion of its interfaces, such that each end effector of an operating arm among the robotic arms can be orientated relatively to each of the structural modules of another of the arms being reconfigured.

In some embodiments, that at least one actuator may be configured to cause translation of at least one of the at least one interfaces of an active structural module relative to at least a part of the remainder of the active structural module.

In some embodiments, the active structural module may comprise a telescopic mechanism configured to translate a first portion of the module relative to a second part of the module.

In some embodiments, the at least one actuator may be configured to cause rotation of at least one of the at least one interfaces of an active structural module relative to at least a part of the remainder of the active structural module.

In some embodiments, the plurality of structural modules may further comprise at least one passive module configured to extend from at least one active structural module.

In some embodiments, the at least one passive module may form a structural limb of the modular robotic arm.

In some embodiments, the at least one active structural module may form a joint between two other structural modules.

In some embodiments, the joint may provide a single rotational degree of freedom. In some embodiments, the joint may comprises an in-line unit configured to rotate about a longitudinal axis of the unit.

In some embodiments, the joint may comprise a corner unit comprising two longitudinal axes extending perpendicularly to each other, the corner unit being configured to rotate about one longitudinal axis of the corner unit.

In some embodiments, the joint may provide two rotational degrees of freedom. In some embodiments, the joint may comprise a corner unit comprising two longitudinal axes extending perpendicularly to each other, the corner unit being configured to rotate about both longitudinal axes of the corner unit.

In some embodiments, the joint may comprise an orthogonal unit comprising three longitudinal axes, wherein two of the longitudinal axes extend parallel to but spaced from each other, the orthogonal unit being configured to rotate about both of the parallel longitudinal axes.

In some embodiments, the joint may provide three rotational degrees of freedom. In some embodiments, the joint may comprise an orthogonal unit comprising three longitudinal axes extending perpendicularly to one another the orthogonal unit being configured to rotate about each of the longitudinal axes.

In some embodiments, the arm is able at least to displace the end effector in the three spatial directions in each configuration of the robotic arms.

In some embodiments, the arm may be able at least to rotate each module around an axis arranged in an insertion direction in relation with said interface in each configuration of the robotic arm.

In some embodiments, each of the at least one interfaces may comprise a coupling. In some embodiments, the coupling has a rotational degree of symmetry of between two and eight such that adjacent structural modules can be connected in a plurality of orientations. In some embodiments, the coupling may be an electro-mechanical coupling. In some embodiments, the coupling may be a mechanical coupling.

In some embodiments, the active structural module may further comprise interface control electronics configured to control the coupling and decoupling of the interface of the active structural module from an adjacent structural module.

In some embodiments, the active structural module may comprise a single interface control electronics unit that controls at least two interfaces on the active structural module. In some embodiments, the active structural module may comprise at least two interface control electronics units that control an interface each on the active structural module.

In some embodiments, each of the plurality of structural modules may comprise an interface at both its ends. In some embodiments, each of the at least one interfaces is identical such that the plurality of structural modules can be assembled in any order. In some embodiments, the active structural module may further comprise actuator control electronics.

In some embodiments, at least one robotic arm may further comprise a reconfigurable end effector configured to perform an operation. In some embodiments, the end effector may be reconfigurable in that it can be replaced by an identical end effector or by a different end effector configured to perform a different operation.

In some embodiments, the reconfigurable end effector may comprise a robotic tool configured to hold a grappling fixture of the plurality of structural modules. In some embodiments, the robotic tool may comprise a coupling actuator configured to control the coupling and decoupling of the interface of a first active structural module as it is connected to or removed from a second adjacent structural module.

In some embodiments, the coupling actuator may comprise the interface control electronics configured to control the coupling and decoupling of the interface of the active structural module from an adjacent structural module. In some embodiments, the coupling actuator may be configured to activate or deactivate the coupling of the interfaces through the grappling fixture. In some embodiments, the robotic tool may comprise a robotic hand.

In some embodiments, one robotic arm is a service robotic arm and one robotic arm is an operational arm, the service robotic arm being configured to service the operational arm and the operational arm being configured to perform an operational task. In some embodiments, each robotic arm is modular.

In some embodiments, the system may further comprise a workbench comprising a plurality of base fixing points configured to receive a base fixing point for building a robotic arm. In some embodiments, the service arm may be moveable, and the base fixing points are configured to receive the moveable service robotic arm.

In some embodiments, the workbench may further comprise a storage compartment configured to store a plurality of structural modules for assembly in the space environment.

In some embodiments, the system may form a part of an apparatus for use in a radioactive environment. In some embodiments, the apparatus may be for use in the nuclear industry.

In some embodiments, the system may form a part of an apparatus for use in space. In some embodiments, the apparatus maybe for use in space as a spacecraft. In some embodiment, the apparatus maybe for use in space as a satellite.

In another aspect of the present invention, there is provided a method of assembling a modular robotic arm in a hazardous environment, the method comprising: placing a system into a hazardous environment, using a service robotic arm to assemble a first modular robotic arm for performing an operation in the hazardous environment.

In another aspect of the present invention, there is provided a method of reconfiguring a modular robotic arm, the method comprising reconfiguring the modular robotic arm by: replacing at least one structural module of the plurality of structural modules; and/or repositioning at least one structural module of the plurality of structural modules relative to at least one other structural module of the plurality of structural modules; and/or removing at least one structural module of the plurality of structural modules from the plurality of structural modules; and/or adding at least one further structural module to the plurality of structural modules.

In some embodiments, the modular robotic arm may be reconfigured by replacing a module in a hazardous environment, the method comprising: identifying a structural module to be replaced in the modular arm, using a service robotic arm to remove any distal modules located beyond the module to be replaced from the modular robotic arm, placing any distal modules from the modular robotic arm on a base fixing point, removing the module to be replaced from the remainder of the modular robotic arm and placing the module to be replaced in a storage compartment, picking up a replacement module from the storage compartment and connecting it to the remainder of the modular arm, picking up any distal modules and connecting them to the replacement module.

In some embodiments, the module to be replaced may be a faulty module or an old module approaching the end of its life cycle. In some embodiments, the module to be replaced may be replaced with an identical module. In some embodiments, the module to be replaced may be replaced with a different module.

In some embodiments, the modular robotic arm may be reconfigured by removing a module in a hazardous environment, the method comprising: identifying a structural module to be removed in the modular arm, using a service robotic arm to remove any distal modules located beyond the module to be removed from the modular robotic arm, placing the distal modules from the modular robotic arm on a base fixing point, removing the module to be removed from the remainder of the modular robotic arm and placing the module to be removed in a storage compartment, picking up the distal modules and connecting them to the remainder of the modular robotic arm.

In some embodiments, the modular robotic arm may be reconfigured by adding a module in a hazardous environment, the method comprising: identifying a structural module to be added to the modular arm and the position in which the structural module is to be placed, using a service robotic arm to remove any distal modules located beyond the position in which the structural module is to be placed from the modular robotic arm, placing the distal modules from the modular robotic arm on a base fixing point, picking up the additional module from the storage compartment and connecting it to the remainder of the modular arm, picking up the distal modules and connecting them to the additional module.

Advantageously a robotic arm according to the invention is designed to perform and repeat a dedicated tasks with the ability of being repaired if needed.. Furthermore the robotic arm according to the invention is able to evaluate according to the evolving context or according to the evolving needs of the mission. As a consequence, the number of robotic arms for performing all the required tasks is reduced.

Another advantage of the present invention is that removing of a module of one of the robotic arm is facilitated by the absence of gravity, such that a long portion of an arm can easily be separated from the rest of the arm attached to the base, in order to replace an intermediate module.

### Brief Description of the Drawings

Embodiments of the invention will now be described, by way of examples only, with reference to the accompanying drawings, in which:
Fig. 1 shows a schematic perspective view of an embodiment of a modular robotic arm with an end effector omitted;
Fig. 2 shows a schematic view of an active structural module for use in a modular robotic arm;
Fig. 3 shows a schematic view of a passive structural module for use in a modular robotic arm;
Fig. 4 shows a schematic view of an active structural module for use in a modular robotic arm;
Fig. 5 shows a schematic view of an active structural module for use in a modular robotic arm;
Fig. 6 shows a schematic view of an active structural module for use in a modular robotic arm;
Fig. 7 shows a schematic view of an active structural module and a coupling actuator;
Fig. 8 shows a schematic view of an active structural module and a coupling actuator
Fig.9 shows a schematic side view of a passive structural module forming a limb;
Fig. 10 shows a schematic side view of an active structural module forming telescopic module;
Fig. 11 shows a schematic side view of an active structural module forming a first embodiment of an in-line joint;
Fig. 12 shows a schematic side view of an active structural module forming a first embodiment of a corner joint;
Fig. 13 shows a schematic side view of an active structural module forming a second embodiment of a corner joint;
Fig. 14 shows a schematic side view of an active structural module forming a first embodiment of an orthogonal joint;
Fig. 15 shows a schematic side view of an active structural module forming a second embodiment of an orthogonal joint;
Fig. 16 shows a schematic perspective view of a robotic service arm;
Fig. 17 to Fig. 26 show the stages of replacing a faulty module schematically;
Fig. 27 to Fig. 30 show the stages of extending a workspace schematically.

### Detailed Description

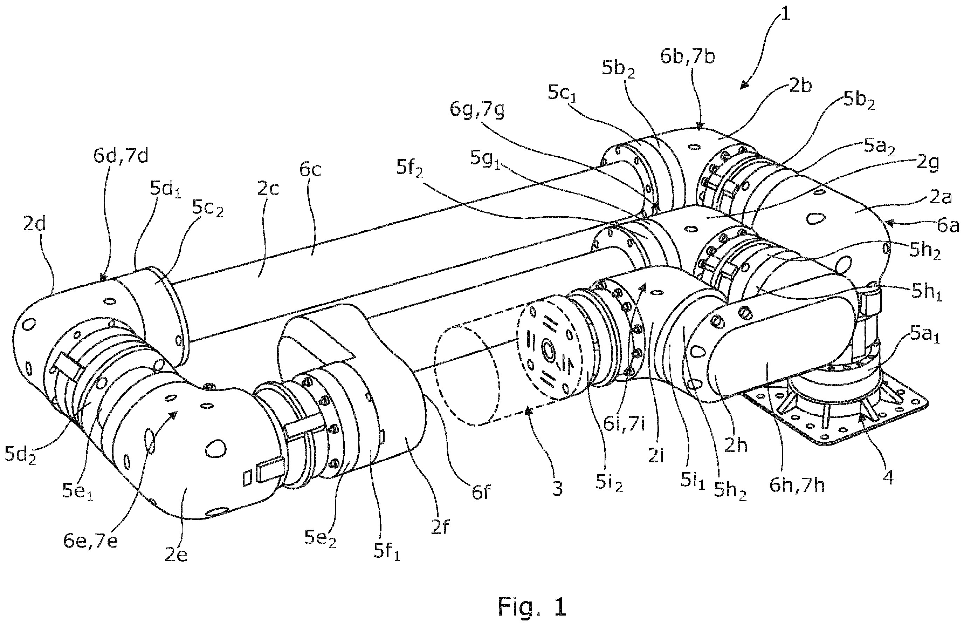

Referring to Fig. 1, an embodiment of a modular robotic arm 1 for use in a hazardous environment is shown. A hazardous environment in the context of this application can be considered to be an environment that poses a threat to human life. Exemplary hazardous environments include, but are not limited to, radioactive environments in the nuclear sector, which may be as a result of an accident or maintenance of nuclear facilities, environments in which the atmosphere is toxic such as gas leaks, chemical leaks, and extra-terrestrial atmospheres, and space environments such as near vacuum environments and/or micro gravity environments.

The modular robotic arm 1 comprises a plurality of structural modules 2 and at least one end effector 3, shown schematically in dotted line in Fig. 1. The at least one end effector 3 is configured to perform at least one operation. The embodiment shown in Fig. 1 comprises nine structural modules 2a-2i.

A first structural module 2a is connected to a base fixing 4. In some embodiments, the base fixing 4 may form a part of the modular robotic arm 1. In other embodiments, the base fixing 4 may be attached to a vehicle, such as a spacecraft, satellite, drone, or other remote-controlled or autonomous vehicle, or part thereof, such as a space platform. That is, the base fixing 4 may be linked to a space platform, for example. The link between the base fixing 4 and the vehicle may be permanent such that the base fixing 4 does not move relative to the vehicle or the base fixing 4 may be releasably coupled to the vehicle so that the base fixing 4 may be moved between base fixing points on the surface of the vehicle. The base fixing 4 may comprise an interface 5 configured to engage the first structural module 2a. In the present embodiment, the remaining modules 2b-2i are engaged sequentially and referred to in increasing ordinal numbers, i.e. second, third, fourth, etc.

Each of the plurality of structural modules 2 comprises at least one interface 5. In the embodiments described, each of the plurality of structural modules 2 comprises at least two interfaces 5. The at least one interface 5 of each of the plurality of structural modules 2 is configured to connect each of the plurality of structural modules 2 to at least one adjacent structural module 2. Each of the at least one interfaces 5 may be capable of being releasably coupled to an interface of an adjacent structural module 2 such that connected structural modules 2 can be disconnected. Each of the plurality of structural modules 2 are configured such that a first interface is configured to connect the structural module 2 to one adjacent structural module 2 or to the base fixing 4, and a second interface 5b is configured to connect the structural module 2 to another adjacent module 2 or to the end effector 3.

In the embodiment shown in Fig. 1, it can be seen that each of the plurality of structural modules 2a-2i has an interface 5a₁-5i₂ at each end. For example, it can be seen that the third structural module 2c has a first interface 5c₁ at one end and a second interface 5c₂ at the other end. The first interface 5c₁ of the third structural module 2c is engaged with a second interface 5b₂ of the second structural module 2b and the second interface 5c₂ of the third structural module 2c is engaged with the first interface 5d₁ of the fourth structural module 2d.

In each configuration, the robotic arm 1 is reconfigurable by another robotic arm. The other robotic arm may change at least one structural module 2 of the robotic arm 1 in a space environment. The other robotic arm which performs the reconfiguration may be referred to as a service arm. The modular robotic arm 1 may have a first configuration of the plurality of structural modules 2. The modular robotic arm 1 illustrated in Fig. 1 shows an example of a first configuration. The modular robotic arm 1 may be robotically reconfigurable to change the modular robotic arm 1 from its first configuration to a second configuration of the plurality of structural modules whilst the modular robotic arm 1 is in a hazardous environment.

In the context of the present application, the modular robotic arm 1 being robotically reconfigurable may be considered to mean that the modular robotic arm 1 is reconfigured by another robotic arm, i.e. a further/service robotic arm. The modular robotic arm 1 may be reconfigured autonomously by another robotic arm, such as a robotic service arm. Alternatively, the further robotic service arm may be remote controlled by a human operator.

Furthermore, each of the plurality of structural modules 2 comprise at least one external attachment area. 6. Thus, in the present embodiment, the modular robotic arm 1 comprises nine external attachment areas 6a-6i - one external attachment area 6 per structural module 2a-2i. The external attachment areas 6 are areas that are compatible with an end effector of a further robotic arm (not shown). The further robotic arm may alternatively be referred to as a robotic service arm. The external attachment areas 6 are configured to be engaged by the end effector of the further robotic arm such that each of the plurality of structural modules 2 can be engaged and moved by the further robotic arm/robotic service arm.

The modular robotic arm 1 can be reconfigured in a number of different ways. A first option for changing a first configuration of the modular robotic arm 1 to a second configuration of the modular robotic arm 1 is by replacing at least one of the plurality of structural modules 2. The structural module 2 that is replaced may be replaced by an identical structural module 2. In this example, the modular robotic arm 1 has been reconfigured because a specific module 2 has been removed and a new module 2 of the same type, i.e. size and capabilities, has been put in its placed.

This type of reconfiguration is advantageous when a specific structural module has a fault or is damaged and cannot function as intended or is approaching the end of its life cycle. The modular nature and reconfigurablity of the robotic arm 1 allows the modular robotic arm 1 to be repaired in the hazardous environment or for a module to be replaced before the module comes to the end of its life cycle.

Thus, the modular robotic arm 1 can be designed and built without the usual redundancies and safety margins as 'monolithic' robotic arms. By reducing the number and/or existence of redundancies and the safety margins, the cost of developing and building the modular robotic arm is reduced. Furthermore, weight reductions derived from the reduction of redundancies and safety margins reduce the cost of launching a modular robotic arm 1 into orbit. The reduced life span or life cycle of a module in not a disadvantage when the module can be easily replaced. In addition, the modular robotic arm 1 can be fixed by replacing a single module whist still in the hazardous environment instead of having to replace the whole arm and without having to remove the arm from the hazardous environment so that technicians can gain safe access to the robotic arm.

Alternatively, the structural module 2 that is replaced may be replaced by a different structural module 2. In this example, the new structural module 2 may have a different size and/or shape and/or functionality and therefore, the robotic modular arm 1 has been reconfigured because the shape, size, or mobility of the modular robotic arm 1 has been changed. This type of reconfiguration is advantageous when the mission of the modular robotic arm evolves and/or the requirements for the mobility of the modular robotic arm change.

A second option for changing a first configuration of the modular robotic arm 1 to a second configuration of the modular robotic arm 1 is by removing at least one of the plurality of structural modules 2 from the modular robotic arm 1.

A third option for changing a first configuration of the modular robotic arm 1 to a second configuration of the modular robotic arm 1 is by adding at least one further structural module 2 to the plurality of structural modules 2 from the modular robotic arm 1.

A fourth option for changing a first configuration of the modular robotic arm 1 to a second configuration of the modular robotic arm 1 is by repositioning at least two of the plurality of structural modules 2 relative to each other. This can be achieved by repositioning at least one of the plurality of structural modules 2 relative to another of the plurality of structural modules 2. Thus, repositioning a structural module 2 relative to another structural module 2 may involve removing a structural module 2 from the modular robotic arm 1 and adding back to the modular robotic arm 1 in a different position, which may involve the removal of further structural modules 2 to be replaced on the first removed structural module once the first removed structural module is added back to the modular robotic arm 1.

In addition, the modular robotic arm 1 may comprise a reconfigurable end effector 3. The reconfigurable end effector 3 may be configured to perform an operation. The reconfigurable end effector 3 may be reconfigurable in the sense that the end effector 3 connected to the last module 2, for example ninth module 2i of Fig. 1, can be replaced with an identical end effector 3 or a different end effector 3. Furthermore, the modular robotic arm 1 is reconfigurable by reconfiguring the end effector 3.

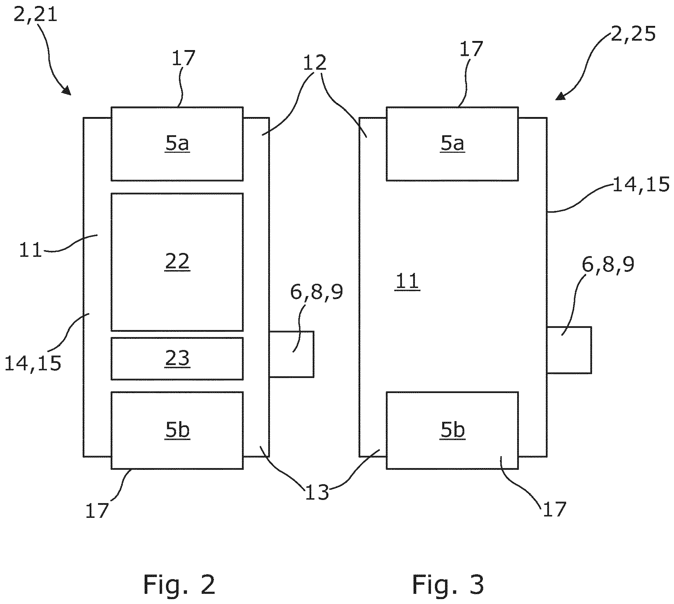

The external attachment areas 6 provide a means for a service robotic arm to grasp and/or hold the structural modules 2. In some embodiments, the external attachment area may be the external surface of the structural module 2 itself. In some embodiments, each of the structural modules 2 may comprise at least once recess 7 configured to receive a tool (not shown) of a service robotic arm 1. As shown in Fig. 2, the external attachment area 6 may comprise a grapple fixture 8 configured to allow a further robotic arm 1 to hold the structural module 2. The grapple fixture 8 may comprise a projection 9 that extends from the main body of the structural module 2.

In some embodiments, the reconfigurable end effector 3 may comprise a robotic tool. The robotic tool may be configured to hold the external attachment areas 6, such as the grapple fixtures 8, of a plurality of structural modules 2. In some embodiments or configuration, the robotic tool may comprise a robotic hand. In further embodiments or configurations, the robotic tool may be, for example, but not limited to...

Referring now to Fig. 2 and Fig. 3, each structural module 2 may comprise a main body 11. The structural module 2 has a first end 12 and a second end 13, as illustrated schematically in Fig. 2. The structural modules 2 illustrated in Fig. 2 and Fig. 3 are linear structural modules. However, it will be appreciated that the structural modules 2 may take other forms, such as those exemplary structural modules 2 shown in Fig. 1. The main body 11 comprises an outer housing 14 having an external surface 15. The external surface 15 is visible in Fig. 1 but is not shown using reference numerals to preserve the clarity of the drawing., and at least a part of the external surface 15 of the outer housing 14 may form the external attachment area 6 for a robotic arm to hold.

In some embodiments, the outer housing 14 may be load bearing. Alternatively, the outer housing 14 may function as an outer skin and the main body 11 may comprise a load bearing structure (not shown) located within the outer housing 14. In the illustrated embodiments, the outer housing 14 is generally cylindrical. However, it will be appreciated that the outer housing 14 may have any cross-sectional shape, and that the cross-sectional shape of the outer housing 14 may vary along its length. Furthermore, each of the plurality of structural modules may have a different shape so long as the interfaces of the plurality of structural modules 2 can engage.

At at least the first or second end 12, 13 of the structural module 2 there is located an interface 5. In the embodiments illustrated, the structural module 2 comprises a first interface 5a at the first end 12 of the structural module 2 and a second interface 5b at the second end 13 of the structural module 2. The interface units 5a, 5b may be at least partially received within the main housing 11, as shown in Fig. 2 and Fig. 3. Alternatively, the interface units 5a, 5b may be located outside of the outer housing 14 of the main body 11 of a structural module 2, as shown in Fig. 1.

In some embodiments of the modular robotic arm 1, each of the plurality of structural modules 2 comprise an interface 5 at both ends 12, 13, as shown in Fig. 2 and Fig. 3. Each of the at least one interfaces of each of the plurality of structural modules 2 may be identical such that the plurality of structural modules 2 can be assembled to any other of the plurality of structural modules, and therefore, in any order. Such interfaces 5 may be androgynous. Alternatively, each of the plurality of structural modules 2 may comprise a male interface 5 at one end of the main body 11 and a female interface 5 at the other end of the main body 11.

The at least one interface 5 of each of the plurality of structural modules 2 may comprise a coupling 17. The coupling 17 of the interface 5 is configured to couple one of the plurality of structural modules 2 to an interface 5 of another of the plurality of structural modules 2. The coupling 17 may be located at the extremity of the interface 5. That is, the coupling 17 may be located on the end surface of the interface 5 that forms one of the ends 12, 13 of the structural module 2.

The interface 5 may be an active interface or a passive interface. An active interface 5 may comprise a coupling 17 that is moved or activated in order to engage the coupling 17 of an interface of an adjacent structural module 2. A passive interface 5 may comprise a coupling 17 that does not require moving or actuation in order to be coupled to an interface of an adjacent structural module 2. That is, a passive interface 5 maybe engaged by an active interface 5, which moves or is actuated to engage and couple to a passive interface, to couple two adjacent structural modules together.

The coupling 17 may have a rotational degree of symmetry such that two adjacent structural modules 2 can be connected together in a plurality of orientations. For example, referring back to Fig. 1, the second structural module 2b is attached to the first structural module 2a such that the second end, or second interface 5b₂, points toward the left of the drawing, but could be attached to the first module 2a such that the second end, or second interface 5b₂, points toward the top of the drawing. In some embodiments, the coupling may have a rotational degree of symmetry of between two and eight.

The coupling 17 may be an electro-mechanical coupling. That is, the electro-mechanical coupling may provide both structural mechanical coupling to hold the interfaces 5 together and electrical connections such that information and power may be supplied to the plurality of structural modules. Alternatively, the coupling 17 may be a mechanical coupling only with the system having a different electronic coupling. The structural mechanical coupling may be any known mechanical fastening, such as for example, but not limited to, mechanical latches, actuated interfaces, such as hooks or fingers, and bayonet type fixings. The structural mechanical coupling maybe in addition or as an alternative to the use of electro-magnets. The coupling 17 may provide the mechanical or magnetic engagement between two adjacent interfaces and may optionally, also provide the connections for power and data communication.

The plurality of structural modules 2 of the modular robotic arm 1 may comprise at least one active structural module 21, as shown in Fig. 2. The active structural module 21 may comprise at least one actuator 22. The at least one actuator 22 may be configured to cause relative motion of the at least one active structural module 21 relative to at least one other adjacent structural module 2. Thus, the active structural module 21 may be referred to as a joint. The at least one active structural module 21 may form a joint between two other modules 2.

The active structural module 21 may further comprise actuator control electronics 23 configured to control the at least one actuator 22. In the embodiment illustrated in Fig. 2, the active structural module 22 comprises a single actuator 22. The actuator 22 may be configured to cause relative motion of the first interface 5a relative to the second interface 5b, as will be described in more detail hereinafter. The structural module 2 also comprises an external attachment area 6 formed by grapple fixture 8 comprising a projection 9 extending perpendicularly from the external surface 15 of the main body 11.

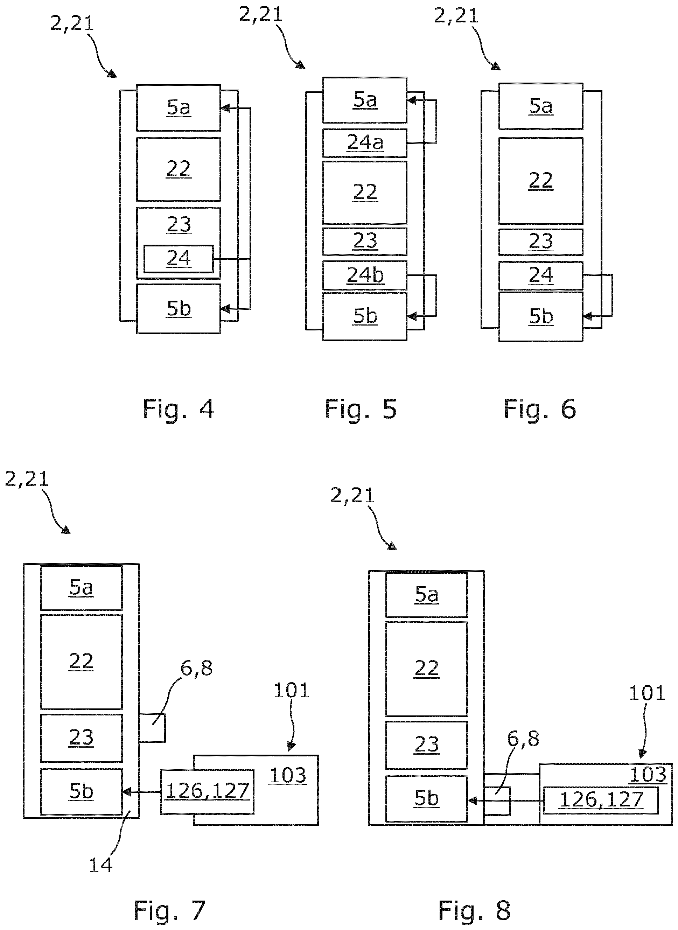

The plurality of structural modules 2 of the modular robotic arm 1 may comprise at least one passive structural module 25, as shown in Fig. 3 and Fig. 4. The passive structural module 25 does not comprise an actuator 21. That is, the passive structural module 25 comprises a main body 11 having a first interface 5a at a first end 12 of the passive structural module 25 and a second interface 5b at a second end 12 of the passive structural module 25, and a grapple fixture 8. The first and second interfaces 5a, 5b of the passive structural module 25 are fixed relative to each other. In some embodiments of the modular robotic arm 1, at least one passive structural module 25 is configured to extend from at least one active structural module 21. The at least one passive structural module 25 forms a structural limb of the modular robotic arm 1.

Referring now to Fig. 4 to Fig. 6, further embodiments of an active structural module 21 are shown. In the illustrated active structural modules 21, the active structural module 21 maybe responsible for actuation of the interface 5, especially when the interface 5 is an electro-mechanical interface. That is, the interface 5 may be internally actuated by the active structural module 21 itself. Therefore, when structural modules 2 are located adjacent to one another, the active structural module 21 may actuate its interface 5 to couple the active structural module 21 to the adjacent structural module 2.

In order to achieve this, the active structural module 21 may comprise interface control electronics. 24. As mentioned above, the interface control electronics 24 maybe configured to control the coupling and decoupling of the interface 5 of the active structural element 21 from an adjacent structural element 2. More specifically, the interface 5 may be actuated by the interface control electronics 24 in order to cause one electro-mechanical coupling 17 to engage the coupling 17 of the adjacent structural module 2 and couple the two modules 2 together.

The active structural module 21 may comprise a single interface control unit 24 that is configured to control at least two interfaces 5 on the active structural module 21. As shown in Fig. 4, the active structural module 21 may comprise at least a first interface 5a and a second interface 5b which are both controlled by a single interface control unit 24. The interface control unit 24 may be integrated with the actuator electronics 23.

Alternatively, the active structural module 21 may comprise one interface control unit 24 per active interface 5 on the active structural module. For example, referring to Fig. 5, the active structural module 21 comprises a first active interface 5a controlled by a first interface control unit 24a and a second active interface 5b controlled by a second interface control unit 24b. In another configuration, as shown in Fig. 6, the active structural module 21 comprises a first interface 5a, which is an active interface, controlled by a first interface control unit 24a and a second interface 5b, which is a passive interface that does not require an interface control unit.

Referring now to Fig. 7 and Fig. 8, active structural module 21 of Fig. 2 are shown together with a robotic service arm 101 comprising an end effector 103. In the illustrated active structural modules 21, the end effector 103 of the robotic service arm 101 may be responsible for actuation of the interface 5, especially when the interface 5 is an electro-mechanical interface. That is, the interface 5 may be externally actuated by the end effector 103 of the robotic service arm 101. Therefore, when structural modules 2 are located adjacent to one another, the end effector 103 of the service robotic arm 101 may actuate the interface 5 to couple the active structural module 21 to the adjacent structural module 2.

The end effector 103 of the robotic service arm 101 may comprise a coupling actuator 126. The coupling actuator 126 may be configured to control the coupling and decoupling of the interface of an active structural module 21 as it is connected to or removed from an adjacent structural module 2. The coupling actuator 126 may comprise an interface control unit 127. The interface control unit 127 may be configured to control the coupling and decoupling of the interface of the active structural module 21 from an adjacent structural module 2.

The interface control unit 127 may comprise interface control electronics and/or a mechanical tool configured to engage the interface 5 of the active structural module 21. In one embodiment, as shown in Fig. 7, the interface control unit 127 may engage the interface 5 of the active structural module 21 directly. This may be through an aperture (not shown) in the housing 14 of the active structural module 21. Thus, the actuation of the interface 5 may take place after the service robotic arm 1 has placed the module 21 in its position in the modular robotic arm 1 after the end effector 103 has released the external attachment area 6 or grapple fixture 8.

Alternatively, as shown in Fig. 8, the coupling actuator 126 may be configured to activate or deactivate the coupled of the interfaces 5 through the grappling feature 8. Thus, a mechanical and/or electronic contact (not shown) may be present at the end of the grapple fixture 8 for connection with the interface unit 127 in the end effector 103. Therefore, the robotic service arm 101 can actuate the coupling 17 of an interface 5 of an active structural module 21 to coupled or decouple from an adjacent structural module 2 at the same time as adding or removing the active structural module 21 to or from the modular robotic arm 1.

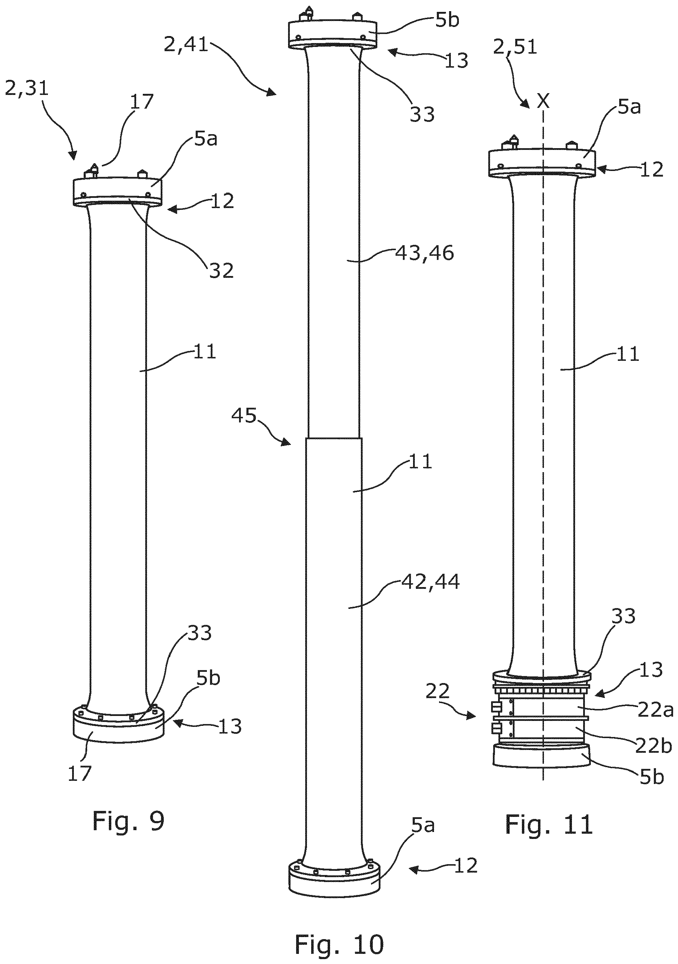

Referring now to Fig. 9, an embodiment of a structural module 31 is shown. The structural module 31 illustrated in Fig. 9 is generally the same as the general structural modules 2 described above. Therefore, a detailed description will be omitted herein and similar features will retain the same nomenclature and reference numerals. The structural module 31 illustrated in Fig. 9 is a passive structural limb 31.

The structural module 31 comprises a cylindrical main body 11. The structural module 31 has a first passive interface 5a located at the first end 12 of the main body 11 and a second passive interface 5b at the second end 13 of the main body 11. In the present embodiment, the first passive interface 5a comprises a male coupling 17 and the second passive interface 5b comprises a female coupling 17.

The first end 12 of the main body 11 comprises a first enlarged portion 32. The first enlarged portion 32 has a larger diameter than the rest of the main body 11. The first passive interface 5a is connected to the first enlarged portion 32. The second end 13 of the main body 11 comprises a second enlarged portion 33. The second enlarged portion has a larger diameter than the rest of the main body 11. In the present embodiment, the second enlarged portion 33 has the same diameter as the first enlarged portion 32.

The length of the main body 11 between the first end 12 and the second end 13 may be any length. The length of the main body 11 may be determined based upon the requirement of the structural limb 31 and the need of the modular robotic arm 1.

Referring now to Fig. 10, a further embodiment of a structural module 41 is shown. The structural module 41 illustrated in Fig. 10 is similar to the embodiment of the structural module 31 illustrated in Fig. 9. Therefore, a detailed description will be omitted herein and similar features will retain the same nomenclature and reference numerals. The structural module 41 illustrated in Fig. 10 may be considered to be an active structural joint 41 or an active structural limb 41 as the module extends along a single axis.

The active structural module 41 comprises at least one actuator (not shown in Fig. 10) that is configured to cause translation of at least one of the at least one interfaces 5a, 5b of the structural module 41 relative to at least a part of the remainder of the active structural module 41 along the longitudinal axis X of the structural module 41.

In Fig. 10, the active structural joint 41 is shown in the extended position. To achieve this extended position. The active structural limb 41 comprises a first portion 42 and a second portion 43. The first portion 42 comprises a first main body 44 comprising a first interface 5a at a first end 12 and an open opposing end 45. The second portion 43 comprises a second main body 46 comprising a second interface at a second end 13. The second main body 46 has a smaller diameter than the first main body 44. The first main body 44 is hollow and configured to at least partially receive the second main body 46 therein.

It will be appreciated that the first main body 44 may be longer than the second main body 46. Therefore, when the active structural limb 41 is in its retracted position, the second main body 46 may be located entirely within the first main body 44. In the retracted position, the second enlarged portion 33 may close the open end 45 of the first main body 44, and the active structural limb 41 may look similar to the passive structural limb 31 shown in Fig. 9.

The active structural module 41 may comprise a telescopic mechanism configured to translate the first portion 42 of the module 41 relative to a second part 43 of the module 41. The actuator (not shown in Fig. 10) may be located within the first main body 44 and proximate to the open end 45 of the first main body 44. Thus, when actuated, the actuator can drive the second main body 46 relative to the first main body 44. By positioning the actuator proximate to the open end 45 of the first main body 44, the stroke length of the second main body 46 can be maximised.

The actuator may be driven in one direction to cause translation of the second interface 5b relative to the first interface 5a such that the structural module 41 moves from its retracted position to its extended position. The actuator may be driven in the opposite direction to cause translation of the second interface 5b relative to the first interface 5a such that the structural module 41 moves from its extended position to its retracted position. The actuator may be capable of extending and holding the second interface 5b at any position between the retracted and extended positions. In some embodiments, one actuator may extend the second interface 5b and another actuator may retract the second interface 5b. The actuator maybe chosen from any known mechanical or electro-mechanical actuator, such as for example, but not limited to....

Referring now to Fig. 11, an embodiment of a structural module 51 is shown. The structural module 51 illustrated in Fig. 11 is generally the same as the embodiment of the structural module 31 illustrated in Fig. 9. Therefore, a detailed description will be omitted herein and similar features will retain the same nomenclature and reference numerals. The structural module 51 illustrated in Fig. 11 is an active structural joint 51 or an active structural limb 51 as the module extends along a single axis.

The embodiment of the structural module 51 shown in Fig. 11 forms a joint capable of providing a single degree of freedom. That is, the structural module 51 shown in Fig. 11 forms a joint that allows rotation about a single axis. The structural module 51 comprises a main body 11 having a first end 12 and a second end 13. The main body 11 extends linearly such that the structural module 51 has a single longitudinal axis X. Thus, the active structural module 51 forms an in-line unit configured to rotate about the longitudinal axis X of the in-line unit 51.

The structural module 51 comprises an actuator 22. The actuator 22 is configured to cause rotation of at one interface 5 relative to at least a part of the remainder of the active structural module 51. The structural module 51 comprises a first interface 5a at its first end 12. The structural module 51 comprises an actuator 22 at the opposing end of the main body 11. In the present embodiment, the actuator 22 is connected to the second enlarged portion 33 of the main body 11. The second interface 5b is connected to the actuator 22 on the opposing side of the actuator 22 to the main body 11. Therefore, the actuator 22 is configured to cause rotation of the second interface 5b relative to at least the first interface 5a. Thus, in the present embodiment, when the actuator 22 rotates, the second interface 5b is rotated relative to the main body 11 of the active structural module 51.

The actuator 22 may be formed of a first portion 22a and a second portion 22b. The first portion 22a may be attached to the main body 11 and the second portion 22b may be attached to the second interface 5b. The second portion 22b of the actuator 22 may be rotatably attached to the first portion 22a. An actuating mechanism may cause the second portion 22b of the actuator 22 to rotate relative to first portion 22a of the actuator 22. The actuating mechanism may be any know mechanical or electro-mechanical actuating mechanism.

It will be appreciated that one structural module may comprise the translational mechanism of the module shown in Fig. 10 and the rotational mechanism of the module shown in Fig. 11.

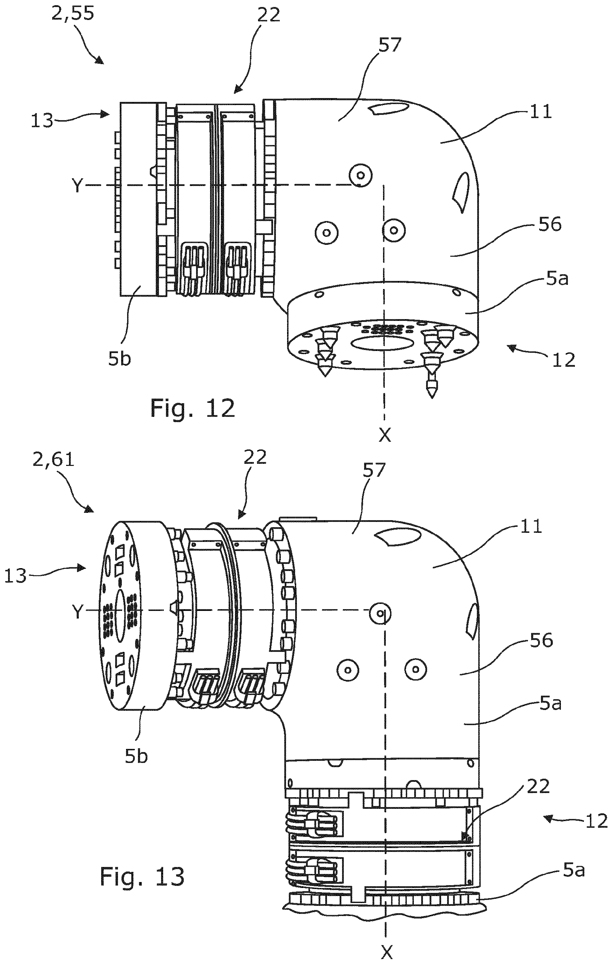

Referring now to Fig. 12, an embodiment of a structural module 55 is shown. The structural module 55 illustrated in Fig. 12 is generally the same as the embodiment of the structural module 51 illustrated in Fig. 11. Therefore, a detailed description will be omitted herein and similar features will retain the same nomenclature and reference numerals. The structural module 55 illustrated in Fig. 12 is an active structural joint 55.

The embodiment of the structural module 55 shown in Fig. 12 forms a joint capable of providing a single degree of freedom. That is, the structural module 55 shown in Fig. 12 forms a joint that allows for rotation about a single axis. In the present embodiment, the joint comprises a corner unit. The corner unit comprises two longitudinal axes extending perpendicularly to each other. The present embodiment of the corner unit is configured to rotate about one of the longitudinal axes.

The structural module 55 comprises a main body 11 having a first end 12 and a second end 13. The main body 11 comprises a first section 56 having a first longitudinal axis X and a second section 57 having a second longitudinal axis Y. The second section 57 extends perpendicularly relative to the first section 56. Therefore, the end surface of the first end 12 of the main body 11 extends perpendicularly to the end surface of the second end 13 of the main body 11.

The structural module 55 comprises an actuator 22. The actuator 22 is configured to cause rotation of at least one interface 5 relative to at least a part of the remainder of the active structural module 55. The first section 56 of the main body 11 has a first interface 5a at its first end 12. The first interface 5a is a passive interface. That is, the first interface 5a is not configured to rotate relative to the first section 56 of the main body 11. The second section 57 of the main body 11 has an actuator 22 at its second end 13. A second interface 5b with a female coupling 17 is located on the opposite side of the actuator 22 to the main body 11. However, it will be understood that the couplings 17 may be the other way round

The actuator 22 is configured to cause rotation of the second interface 5b relative to at least the first interface 5a. Thus, in the present embodiment, when the actuator 22 rotates, the second interface 5b is rotated relative to the main body 11 of the active structural module 55. Thus, the rotation achieved by the corner unit depends on which interface 5a, 5b is located closer to the base fixing 4.

Therefore, when the first interface 5a is located upstream, i.e. closer to the base fixing 4, the modules downstream, i.e. further from the base fixing 4, can be rotated about an axis extending perpendicularly relative to the insertion or engagement direction of the first interface 5a of the active structural module 55 into an upstream adjacent module. Conversely, when the second interface 5b is located upstream, the modules downstream can be rotated about an axis extending parallel to the insertion or engagement direction of the second interface 5b of the active structural module 55 into an upstream adjacent module.

Referring now to Fig. 13, an embodiment of a structural module 61 is shown. The structural module 61 illustrated in Fig. 13 is generally the same as the embodiment of the structural module 55 illustrated in Fig. 12. Therefore, a detailed description will be omitted herein and similar features will retain the same nomenclature and reference numerals. The structural module 61 illustrated in Fig. 13 is an active structural joint 61.

The embodiment of the structural module 61 shown in Fig. 13 forms a joint capable of providing two degrees of freedom. That is, the structural module 61 shown in Fig. 13 forms a joint that allows for rotation about two axes extending perpendicularly to each other. In the present embodiment, the joint comprises a corner unit. The corner unit comprises two longitudinal axes extending perpendicularly to each other. The present embodiment of the corner unit is configured to rotate about both of the longitudinal axes.

The active structural module 61 shown in Fig. 13 is the same as the active structural module 55 shown in Fig. 12. However, the active structural module 61 further comprises a further actuator 22. The further actuator 22 is located at the first end 12 of the main body 11 between the first end of the main body 11 and the first interface 5a. Thus, no matter which end of the structural module 61 is connected to the upstream module 2, rotation of the downstream modules 2 can rotate about an axis extending parallel to or perpendicular to the insertion or engagement direction of an interface 5a, 5b of the active structural module 61 into an upstream adjacent module.

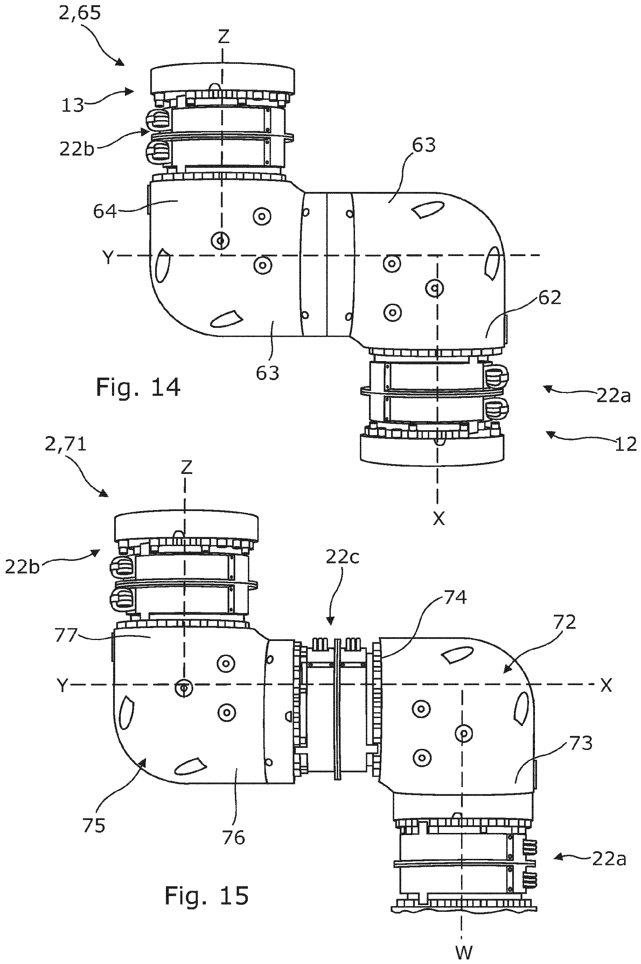

Referring now to Fig. 14, an embodiment of a structural module 65 is shown. The structural module 65 illustrated in Fig. 14 is generally the same as the embodiment of the structural module 61 illustrated in Fig. 13. Therefore, a detailed description will be omitted herein and similar features will retain the same nomenclature and reference numerals. The structural module 65 illustrated in Fig. 14 is an active structural joint 61.

The embodiment of the structural module 65 shown in Fig. 14 forms a joint capable of providing two rotational degrees of freedom. That is, the structural module 65 shown in Fig. 14 forms a joint that allows for rotation about two axes extending parallel to but spaced from each other. In the present embodiment, the joint 61 comprises an orthogonal unit. The structural module 65 is essentially formed from two corner units 55, as shown in Fig. 12.

The main body 11 has a first portion 62 having a first longitudinal axis X, a second portion 63 having a second longitudinal axis Y, and a third portion 64 having a third longitudinal axis Z. The first and third portions 62, 64 are separated by the second portion 63. The first and third portions 62, 64 extend parallel to but spaced from each other and the second portion 63 extends perpendicularly to the first and third portions 62, 64. The first end 12 of the main body 11 has a first actuator 22a and the second end 13 of the main body has a second actuator 22b. The orthogonal unit 61 is configured to rotate about both of the parallel longitudinal axes.

It will be appreciated, that in an alternative embodiment, the third portion 64 may extend perpendicularly to the first portion 62 and the second portion 63, i.e. into or out of the page on which the embodiment is illustrated.

Referring now to Fig. 15, an embodiment of a structural module 71 is shown. The structural module 71 illustrated in Fig. 15 is generally the same as the embodiment of the structural module illustrated in Fig. 14. Therefore, a detailed description will be omitted herein and similar features will retain the same nomenclature and reference numerals. The structural module 71 illustrated in Fig. 15 is an active structural joint 71.

The embodiment of the structural module 71 shown in Fig. 15 forms a joint capable of providing three rotational degrees of freedom. That is, the structural module 71 shown in in Fig. 15 form a joint that allows for rotation about three axes that can all extend perpendicularly to each other. In the present embodiment, the joint 71 comprises an orthogonal unit. The structural module 71 is essentially formed from two corner units 61, as shown in Fig. 13.

The structural module 71 comprises a first body 72 having a first longitudinal axis W and a second longitudinal axis X. The first body 72 has a first end 73 on which is located a first actuator 22a and a second end 74. The structural module 71 further comprises a second body 75 having a first longitudinal axis Y and a second longitudinal axis Z. The second body 75 has a first end 76 and a second end 77 on which is located a second actuator 22b. The second longitudinal axis X of the first body 72 and the first longitudinal axis Y of the second body 75 extend parallel and coincidently with each other. A third actuator 22c is located between the second end 74 of the first body 72 and the first end 76 of the second body 75.

In some embodiments, by selecting the appropriate modules, each configuration of the robotic arm 1 may be able to displace the end effector 3 in three spatial directions. Furthermore, in some embodiments, in each configuration of the modular robotic arm 1, the arm 1 is able to at least rotate each module 2 about an axis parallel to the insertion or engagement direction of the interface 5 of the module 2 into an adjacent upstream module 2.

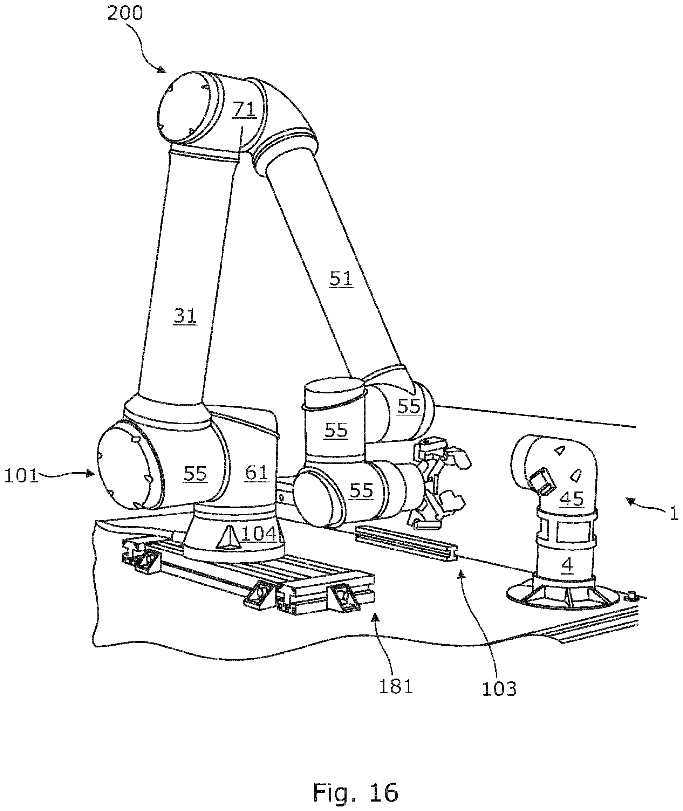

Referring now to Fig. 16, there is shown a system 200 of a plurality of robotic arms. The plurality of robotic arms may comprise a modular robotic arm 1, as described above and a robotic service arm 101. The robotic service arm 101 maybe a modular robotic arm formed of a plurality of structural modules 2, similar to those described above. For example, the modular robotic service arm 101 may comprise a base fixing 4, a corner unit 61, a corner unit 55, a passive unit 31, an orthogonal unit 71, an in-line unit 51, three further corner units 55, and an end effector 103. The modular service robotic arm 101 is shown in the process of building a modular robotic arm 1, as will be described hereinafter.

Each robotic arm 1, 101 of the system 200 of a plurality of robotic arms 1, 101 are of the modular type and are for use in a space environment. However, it will be understood that each robotic arm 1, 101 of the system 200 of a plurality of robotic arms 1, 101 may be for use in another hazardous environment, such as a nuclear or radioactive environment.

Each robotic arm 1, 101 of the system 200 has at least one operational configuration and comprises, in each operational configuration, a base 4 fixed to a space platform A, a plurality of structural modules, one of the plurality of structural modules 2 being connected to the base 4, and at least one end effector 3 configured to perform at least one operation and connected to one of the plurality of structural modules 2.

Each of the plurality of structural modules 2 of the system 200 comprising at least two interfaces 5 configured to connect each of the plurality of structural modules 2 via a first interface 5a to an adjacent structural module 2 or to the base 4 or via a second interface 5b to another adjacent structural module or to the end effector 3. In each configuration, each robotic arm 1, 101 is reconfigurable by another of the robotic arms 1, 101 to change at least one of the plurality of structural modules 2 in the space environment. Each of the plurality of structural modules 2 comprises at least one external compatible attachment area 6 that is compatible with an end effector 3.

Each end effector 3 may comprise a locking and unlocking module 127. The locking and unlocking module 201 is configured to at least engage or disengage the interface 5 of each structural module 2 of the modular arm 1 being reconfigured. The locking and unlocking module 127 may be a coupling actuator, optionally comprising interface control unit 127, as referred to above. The locking and unlocking module may be configured to unlock an interface of a structural module of an arm from the remaining structural modules of the arm that are closer to the base than the unlocked structural module. The locking and unlocking module may be configured to lock into the at least one external compatible attachment area of the unlocked structural module such that the end effector of the operating arm holds the unlocked structural module and removes it from the arm being serviced or built. Preferably, the locking and unlocking module 127 performs the locking and unlocking engagement with the interface closest to the base fixing 4 of the arm 1, 101. In this way, when the interfaces are decoupled, the end effector 3 maintains hold of the structural module that it has just disconnected from the remainder of the arm.

In some embodiments, the bases 4 are placed at predetermined distances from each other such that each base 4 can be reached by at least one of the plurality of robotic arms 1, 101.

In each configuration, each robotic arm 1, 101 may be robotically reconfigurable by another robotic arm 1, 101 to change the end effector 3. Each end effector 3 may comprise at least one external compatible attachment area 6.

Fig. 16 further shows a workbench 181. The workbench 181 comprises at least one base fixing point 104. The at least one base fixing point 4 is configured to receive a structural module 2 for the building and/or placement of a modular robotic arm 1 and/or service robotic arm 101. As shown in Fig. 16, there are a plurality of base fixing points 4, which allows for greater choice in the placement of the robotic arms 1 to suit the operations to be performed.

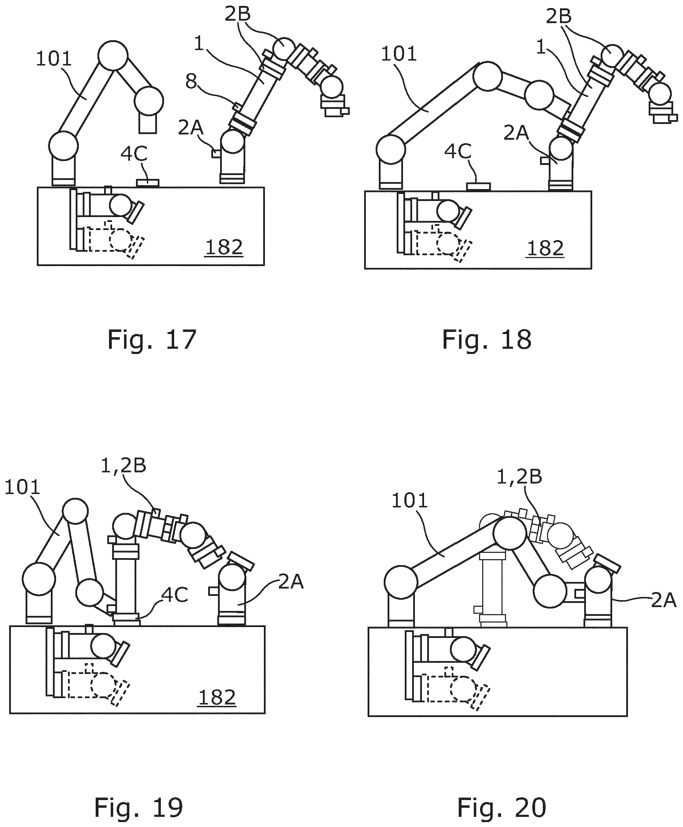

The workbench 181 may comprise a storage compartment 182, as shown in Fig. 17. The storage compartment 182 is configured to store a plurality of structural modules 2.

The system 200 may form a part of an apparatus for use in a radioactive environment. The apparatus may be for use in the nuclear industry. Alternatively, the system forms a part of an apparatus for use in space. The apparatus may be for use in space as a spacecraft. The apparatus maybe for use in space as a satellite.

A modular robotic arm 1 can be assembled in a hazardous environment as shown in Fig. 16. That is, a modular robotic arm 1 can be assembled by placing the apparatus, such as a space vehicle, in a hazardous environment, such as space. The apparatus may comprise a fully formed robotic service arm 101. The robotic service arm 101 is configured to assemble a modular robotic arm 1 once the apparatus 1 is in the hazardous environment.

As shown in Fig. 16, the robotic service arm 101 may comprise an end effector 103 in the form of a robotic tool configured to pick up or grasp an external attachment area 6 of a plurality of structural modules 2, sequentially, for forming a modular robotic arm 1. In the embodiment shown in Fig, 16, the end effector 103 is a robotic hand. The end effector 103 has already placed a corner unit 45 on a base fixing point 4 to enable rotation of downstream structural modules 2, which have not yet been assembled, about an axis extending vertically.

The modular robotic service arm 101 may continue to add structural modules 2 until the required modular robotic arm 1 is achieved. The required modular robotic arm 1 maybe pre-determined. Therefore, the modular robotic service arm 101 maybe programmed to know the position of the plurality of structural modules 2 in the storage compartment and the spatial location of the base fixing point 4 to enable the robotic service arm 101 to place the first structural module 2 on the base fixing point 4, and to place each of the remaining structural modules 2 onto the previous structural module 2 of the modular robotic arm 1.

Alternatively, each of the structural modules 2 may comprise at least one indicia configured to be sensed by a sensor on the end effector 103 of the robotic service arm 101. Thus, the robotic service arm 101 can sense the position and orientation of each of the structural modules 2 and can determine for itself how to best position the end effector 103 to pick up the plurality of structural modules 2 and place them adjacent to one other for coupling during assembly. The same method of spatial determination can be used for repositioning modules in the modular robotic arm 1 as well as for adding modules, for example during assembly, or for removing modules, for example in disassembly.

The robotic service arm 101 is modular itself such that it can be reconfigured to enlarge its workspace, i.e. the area in three dimensions into which its end effector 103 can be placed.

As mentioned above, a modular robotic arm 1 can be reconfigured by replacing at least one structural module of the plurality of structural modules, and/or repositioning at least one structural module of the plurality of structural modules relative to at least one other structural module of the plurality of structural modules, and/or removing at least one structural module of the plurality of structural modules from the plurality of structural modules, and/or adding at least one further structural module to the plurality of structural modules.

Referring to Fig. 17, when the modular robotic arm 1 is reconfigured by replacing a module in a hazardous environment, the service robotic arm 101 identifies a structural module 2A to be replaced in the modular robotic arm 1. This may be done by a signal being sent from a specific structural module 2A that it has a fault or is approaching the end of its life cycle to a controller than controls the system 200.

Referring to Fig. 18 and Fig. 19, the robotic service robotic arm 101 then proceeds to remove any distal structural modules 2B, also known as downstream structural modules 2, located beyond the structural module 2 to be replaced from the modular robotic arm 1 using the grapple fixture 8, and removes them from the remainder of the modular robotic arm 1 and places them on an available base fixing point 4C or alternatively in a storage compartment 182.

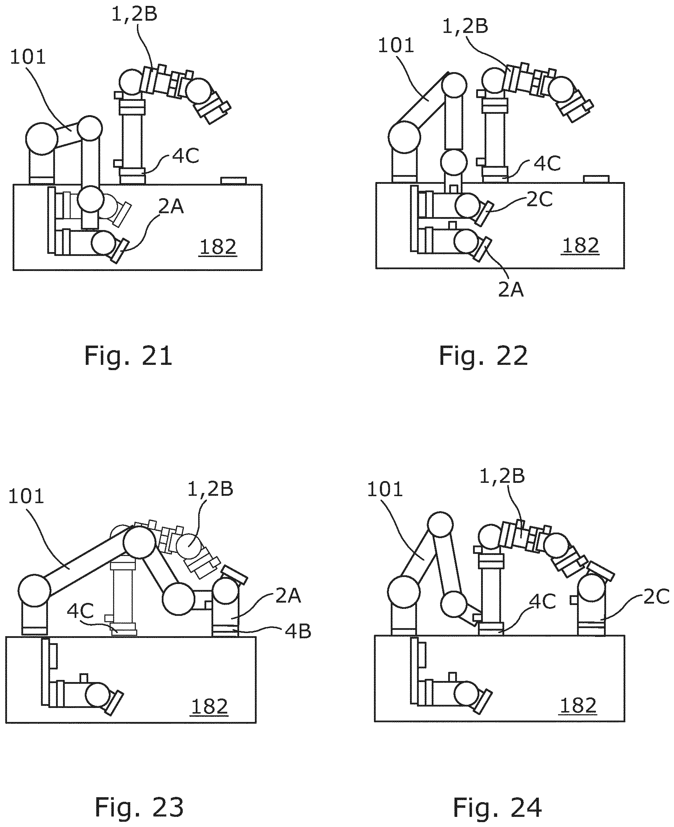

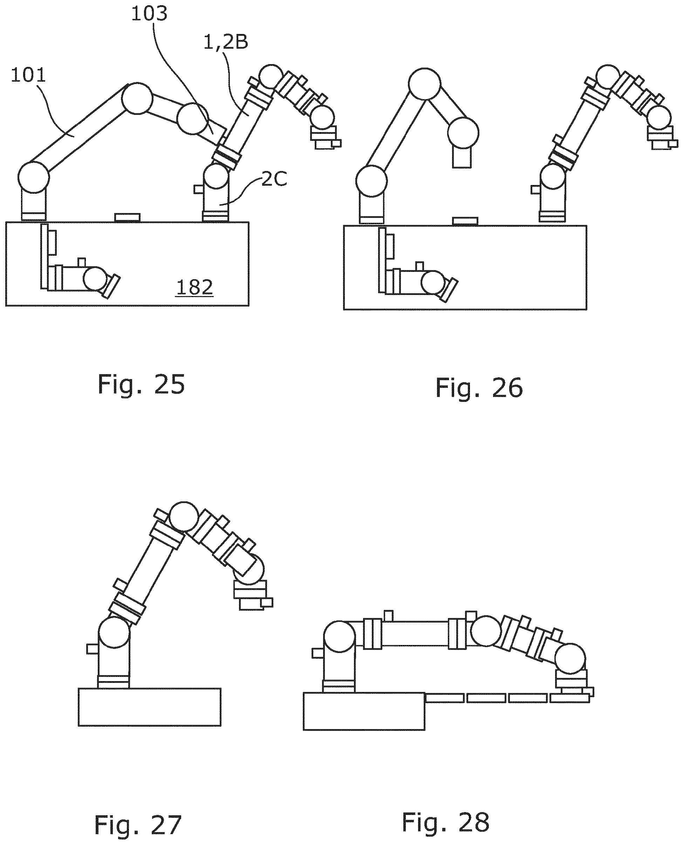

Referring to Fig. 20, the robotic service arm 101 then removes the structural module 2A to be replaced from the remainder of the modular robotic arm 1 and places the structural module 2A to be replaced in a storage compartment 182, as shown in Fig. 21. As the next step, the robotic service arm 101 picks up a replacement structural module 2C from the storage compartment 182 and connects it to the remainder of the robotic modular arm 1, as shown in Figs. 22 and Fig. 23, in this case to the base fixing point 4B. Finally, the robotic service arm 101 picks up any distal structural modules 2B and connects them to the replacement module 2C, as shown in Fig. 24 and Fig. 25.

As a result, the system 200 comprises two modular robotic arms 1, 101, which are both capable of being reconfigured and both capable of reconfiguring each other. It will be appreciated that an apparatus comprising a plurality of base fixing points 4 will also allow the robotic arms to move each other along the apparatus such that they can 'walk' along the apparatus to move to different areas of the workspace to perform operations in a hazardous environment.

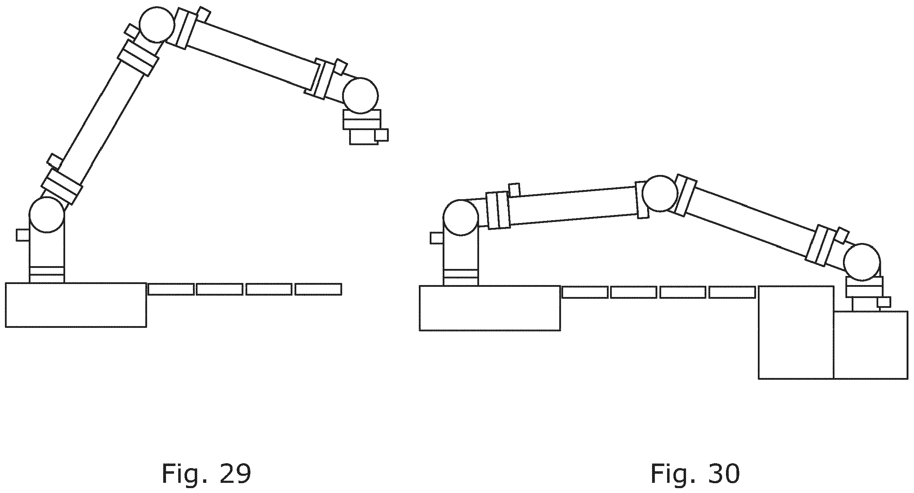

The structural module 2 to be replaced is a faulty module or an old module approaching the end of its life cycle and so is often replaced an identical structural module 2. However, in some embodiments, the structural module 2 to be replaced is replaced with a different structural module 2, as shown for example when comparing Fig. 27 and Fig. 28 with Fig. 29 and Fig. 30. From the comparison it can be seen that the structural limbs have been replaced with longer structural limbs to increase the reach of the modular robotic arm 1 so that the assembly of a satellite, such as an in space assembly apparatus, can be completed.

It will be further understood that the modular robotic arm 1 can be reconfigured by removing a structural module 2 in a hazardous environment. The method is similar to that described above and so a detailed description thereof will be omitted herein. Simply, the robotic service arm 101 identifies a structural module 2 to be removed in the modular robotic arm 1. The robotic service arm 101 then removes any distal structural modules 2 located beyond the structural module 2 to be replaced from the modular robotic arm 1.

The distal structural modules 2 from the modular robotic arm 1 are placed on a base fixing point 4, and the structural module 2 to be removed is removed from the remainder of the modular robotic arm 1 and placed in a storage compartment 128. The distal structural modules 2 are then reconnected to the modular robotic arm 1.

It will be further understood that the modular robotic arm 1 can be reconfigured by adding a structural module 2 in a hazardous environment. The method is similar to those described above and so a detailed description thereof will be omitted herein. Simply, the robotic service arm 101 identifies a structural module 2 to be added to the modular robotic arm 1 and the position in which the structural module2 is to be placed. The a service robotic arm 101 is used to remove any distal structural modules 2 from the modular robotic arm 1 that are located beyond the position in which the structural module 2 to be added is to be placed.

The distal structural modules 2 from the modular robotic arm 1 are placed on a base fixing point 4. The additional structural module 2 is picked up from the storage compartment 128 and connected to the remainder of the modular robotic arm 1, Any distal structural modules2 are then reconnected to the additional structural module 2.

## Claims

1. A system of a plurality of robotic arms, wherein each robotic arm is of the modular type and for use in a space environment, each robotic arm being associated with at least one base fixing linked to a space platform and having at least one operational configuration and comprising, in each operational configuration:
a plurality of structural modules, one of the plurality of structural modules being connected to the base fixing, and
at least one end effector configured to perform at least one operation and connected to one of said plurality of structural modules,
each of the plurality of structural modules comprising at least two interfaces such that a first interface is configured to connect each of the plurality of structural modules to one adjacent structural module or to the base fixing, and a second interface is configured to connect each of the plurality of structural modules to another adjacent structural module or to said end effector,
wherein in each configuration, the plurality of structural modules of each robotic arm of the plurality of robotic arms is reconfigurable by another of the robotic arms in the space environment,
each of the plurality of structural modules comprising at least one external compatible attachment area compatible with said end effector.

2. The system according to claim 1, wherein each end effector comprises a locking and unlocking module for at least engaging or disengaging said first interface of each structural module, while this structural module being maintained by the end effector of the operating arm.

3. The system according to claim 1 or 2, wherein base fixings are placed at distances from each other such that each base fixing can be reached by at least one of the robotic arms.

4. The modular robotic arm according to any one of claim 1 to claim 3, wherein the modular robotic arm is reconfigurable by replacing at least one of the plurality of structural modules with an identical structural module or at least one different structural module, and/or by repositioning at least two of the plurality of structural modules relative to each other, and/or by adding at least one further module to the plurality of structural modules, and/or by removing at least one of the plurality of structural modules from the modular robotic arm.

5. The system according to any one of the preceding claims, wherein said external compatible attachment area comprises a grapple fixture configured such that said end effector of one of the robotic arms, used as service arm, is able to hold each structural module of another of the robotic arms.

6. The system according to any one of the preceding claims, wherein at least some of the structural modules of each robotic arm comprise active structural modules each comprising at least one actuator configured to cause relative motion of its interfaces, such that a relative orientation of each end effector of an operating arm, used as a service arm, among said robotic arms relatively to each of the structural modules of another of the robotic arms being reconfigured enable the end effector to handle said structural module.

7. The system according to claim 6, wherein the at least one actuator is configured to cause translation of at least one of the at least one interfaces of an active structural module relative to at least a part of the remainder of the active structural module.

8. The system according to claim 6 or claim 7, wherein the at least one actuator is configured to cause rotation of at least one of the at least one interfaces of an active structural module relative to at least a part of the remainder of the active structural module.

9. The system according to any one of claim 6 to claim 8, wherein the plurality of structural modules further comprises at least one passive module configured to extend from at least one active structural module.

10. The system according to any one of the preceding claims, wherein in each configuration of the robotic arm, the arm is able at least to displace the end effector in the three spatial directions.

11. The modular robotic arm according to any one of the preceding claims, wherein each of the at least one interfaces comprises a coupling, wherein the coupling has a rotational degree of symmetry of between two and eight such that adjacent structural modules can be connected in a plurality of orientations.

12. The system according to any one of the preceding claims, further comprising a workbench of the platform, the workbench comprising a base fixing point configured to receive a structural module for building the first modular arm.

13. The system according to claim 12, wherein the workbench further comprises a storage compartment configured to store a plurality of structural modules for assembly in the hazardous environment.

14. A method of assembling a modular robotic arm in a hazardous environment, the method comprising:
placing a system according to any one of claim 1 to claim 13 into a hazardous environment,
using a service robotic arm to assemble a first modular robotic arm according to any one of claim 1 to claim 13 for performing an operation in the hazardous environment.

15. A method of reconfiguring a modular robotic arm according to any one of claim 1 to claim 13, the method comprising reconfiguring the modular robotic arm by:
replacing at least one structural module of the plurality of structural modules; and/or
repositioning at least one structural module of the plurality of structural modules relative to at least one other structural module of the plurality of structural modules; and/or
removing at least one structural module of the plurality of structural modules from the plurality of structural modules; and/or
adding at least one further structural module to the plurality of structural modules.
